# EUROPÄISCHE PATENTSCHRIFT

(11) **EP 2 357 128 B1**
(45) Veröffentlichungstag und Bekanntmachung des Hinweises auf die Patenterteilung: **20.08.2014**
(21) Anmeldenummer: 11151467.5
(22) Anmeldetag: 20.01.2011
(51) Int. Cl.: B62M 6/65, B62K 25/00, B60K 7/00

(54) **Antriebseinrichtung für ein Zweirad**
Drive orientation for a bicycle
Dispositif d'entraînement pour un deux-roues

(30) Priorität: 16.02.2010 DE 102010001980
(43) Veröffentlichungstag der Anmeldung: 17.08.2011
(73) Patentinhaber: Robert Bosch GmbH, 70442 Stuttgart (DE)
(72) Erfinder: Lott, Thomas, 77815, Buehl (DE); Meyer, Christian, 76228, Karlsruhe-Wolfartsweier (DE); Meier, Helmut, 77871, Renchen (DE)

(56) Entgegenhaltungen:
- DE-A1- 10 127 769
- JP-A- 2002 252 955
- JP-A- 2007 327 567
- US-A- 5 662 187

## Beschreibung

Die Erfindung geht aus von einer Antriebseinrichtung für ein Fahrzeug, insbesondere ein Zweirad, mit einem, insbesondere elektrischen, Motor zum Antrieb eines der Räder des Fahrzeugs, nach dem Oberbegriff des Anspruchs 1.

Es sind Zweiräder bekannt, die mit einem Antriebsmotor zumindest zur Unterstützung der menschlichen Pedalleistung ausgestattet sind. Dabei ist der insbesondere als Elektromotor ausgebildete Motor entweder direkt an der Pedalwelle oder innerhalb der Radfelge angeordnet. Die Bremseinrichtungen derartiger Fahrzeuge, insbesondere Zweiräder, sind völlig unabhängig davon gestaltet und platziert.

Aus der DE-A-101 27 769 ist eine gattungsgemäße Antriebseinrichtung bekannt.

### Offenbarung der Erfindung

Die erfindungsgemäße Antriebseinrichtung mit den Merkmalen des Anspruchs 1 hat den Vorteil, dass das eine Rad direkt an der Motornabe des Motors montiert werden kann, was zu einer baulichen Verkleinerung führt und ein einfaches Handling beim Montieren und Demontieren eines Rades ermöglicht. Wenn, erfindungsgemäß, der Motor mit einer Bremseinrichtung, z. B. einer Scheibenbremseinrichtung und/oder Trommelbremseinrichtung, zu einer feststehenden Einheit verbunden ist, ergibt sich durch diese Kombination von Antrieb und Bremseinrichtung eine bauliche Verkleinerung und Vereinfachung mit einer reduzierten Anzahl notwendiger Bauteile. Die Kraftübertragung des Motors wirkt dabei unmittelbar an der Felge des Rades. Es ergibt sich der Vorteil einer direkten festen Verbindung zwischen Motor und Bremseinrichtung. Die Antriebseinrichtung kann als eigenständiges Bauteil gestaltet sein, das auch zumindest bedingt eine Nachrüstung ermöglicht und in einfacher Weise an einem Haltearm des Zweirades befestigt werden kann, so dass das anzutreibende eine Rad mit der Radnabe unmittelbar auf die angetriebene Motornabe aufgesetzt und mit dieser drehmomentübertragend verbunden werden kann. Vorteilhaft ist ein insbesondere als Zweirad gestaltetes Fahrzeug, das mit einer Antriebseinrichtung gemäß der Erfindung zum Antrieb eines der Räder ausgestattet ist, wobei der Motor mit seinem Außengehäuse an einem insbesondere als Einarmschwinge ausgebildeten Haltearm lösbar befestigt ist. Eines der Räder ist mit der Felgenaufnahme direkt auf der Motornabe montiert und gehalten. Das undrehbare Funktionselement der Bremseinrichtung ist am Außengehäuse des Motors befestigt, während das drehende Element der Bremseinrichtung in die Radfelge integriert und/oder an dieser befestigt ist. Hierbei ergibt sich eine besonders kompakte Bauweise mit geringer Anzahl von Bauteilen. Die Antriebseinrichtung bedingt nur einen sehr geringen Aufwand und ist kostengünstig, zuverlässig, zur Pflege und ggf. notwendigen Reparatur leicht und einfach zugänglich und auch leicht austauschbar.

Durch die in den weiteren Ansprüchen aufgeführten Maßnahmen sind vorteilhafte Weiterbildungen und Verbesserungen der im Anspruch 1 angegebenen Antriebseinrichtung möglich.

### Beschreibung der Zeichnungen

Die Erfindung ist anhand von in den Zeichnungen dargestellten Ausführungsbeispielen in der nachfolgenden Beschreibung näher erläutert. Es zeigen jeweils in schematischer Darstellung:
- Fig. 1: eine schematische, teilweise geschnittene Seitenansicht einer Antriebseinrichtung für insbesondere ein Zweirad,

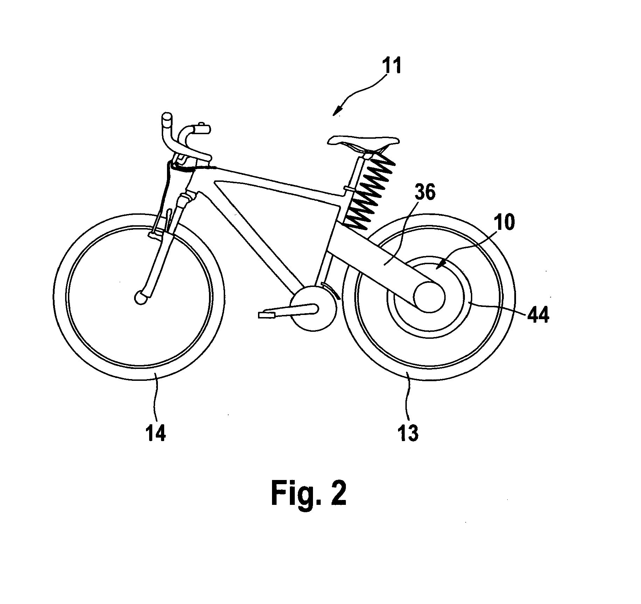

- Fig. 2: eine schematische Seitenansicht eines Zweirades, das mit der Antriebseinrichtung nach Fig. 1 versehen ist.

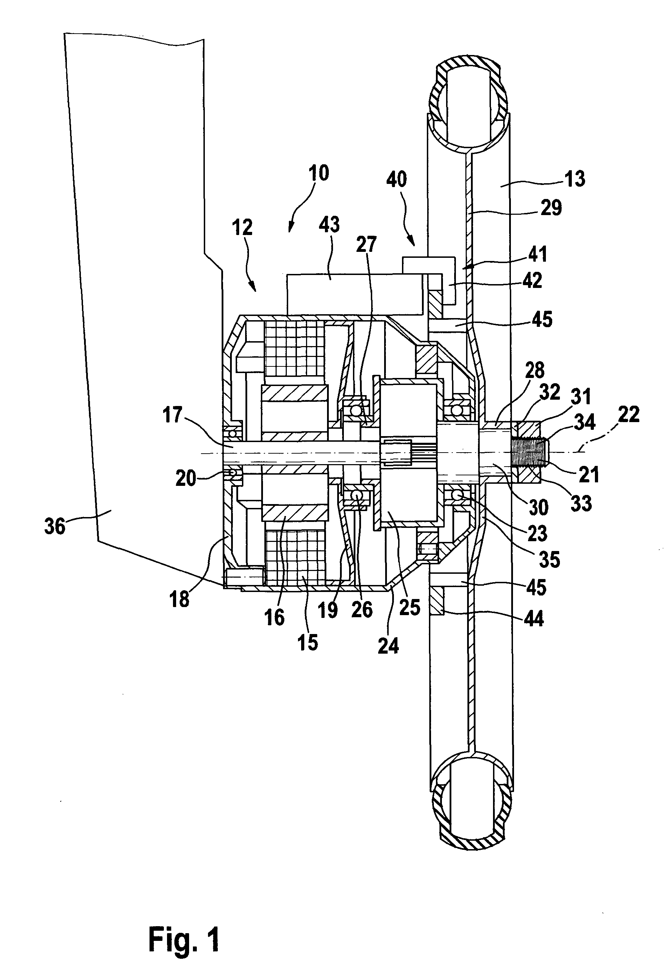

In den Zeichnungen ist eine Antriebseinrichtung 10 für ein nur schematisch angedeutetes Fahrzeug, z. B. ein Zweirad 11, gezeigt, durch die ein kombinierter Motor-/Bremsenaufbau am Zweirad 11 verwirklicht ist. Die Antriebseinrichtung 10 weist einen Motor 12 zum Antrieb eines der Räder 13 oder 14 auf, z. B. des hinteren Rades 13, wobei der Motor 12 in vorteilhafter Weise aus einem Elektromotor mit Stator 15 und Rotor 16 besteht, der auf einer Rotorwelle 17 sitzt und mit dieser umlaufen kann. Der Motor 12 weist ein Außengehäuse 18 auf, in dem der Stator 15 und Rotor 16 mit Rotorwelle 17 aufgenommen sind, wobei das Außengehäuse 18 auf der in Fig. 1 rechten Axialseite mittels eines Deckels 19 verschlossen ist. Die Rotorwelle 17 mit Rotor 16 ist an dem axialen Ende, das dem Deckel 19 gegenüberliegt, mittels eines Lagers 20 in Bezug auf das Außengehäuse 18 drehbar gelagert. Das Außengehäuse 18 des Motors 12 ist feststehend und läuft nicht um. Auf der dem Lager 20 gegenüberliegenden axialen Abtriebsseite des Motors 12 weist die Antriebseinrichtung 10 eine angetriebene Motornabe 21 auf, die koaxial zur Achse 22 des Rades 13 verläuft. Die Motornabe 21 und über diese das Rad 13 ist mittels eines Lagers 23 in Bezug auf einen Gehäuseteil 24 des Außengehäuses 18 drehbar gelagert. Die Motornabe 21 verläuft koaxial zur Rotorwelle 17. Innerhalb des Gehäuseteils 24 ist axial zwischen dem Motor 12 und der Motornabe 21 ein nur schematisch angedeutetes Getriebe 25 enthalten, das vorzugsweise als Planetengetriebe ausgebildet ist, wobei dessen Eingang mit der Rotorwelle 17 des Motors 12 und dessen Ausgang mit der Motornabe 21 in drehmomentübertragender Weise in Verbindung steht. Der Abtrieb des Getriebes 25 kann z. B. durch das Hohlrad des Planetengetriebes gebildet sein und mit der Motornabe 21 einstückig sein, während der Getriebeeingang vom Sonnenrad des Planetengetriebes gebildet ist, mit dem das zugeordnete Ende der Rotorwelle 17 drehmomentübertragend, z. B. mittels Keilwellenverbindung, in Verbindung steht. Zwischen dem Getriebe 25 und dem Deckel 19 ist ein weiteres Lager 26 angeordnet, dessen Außenring am Deckel 19 gehalten ist und dessen Innenring auf einem Ansatz 27 des Getriebes 25 gehalten ist.

Die Motornabe 21 ist zur direkten Befestigung einer Felgenaufnahme 28 der Felge 29 des Rades 13 daran ausgebildet. Die Motornabe 21 ist z. B. als zweifach abgestufter Wellenabsatz ausgebildet, auf dessen Absatz 30, der auf das Lager 23 axial folgt, die Felge 29 mit ihrer Felgenaufnahme 28 axial aufgesteckt ist. Zwischen dem Absatz 30 und der Felgenaufnahme 28 besteht eine drehmomentübertragende Verbindung, z. B. in Form eines Keilwellenprofils oder dergleichen. Die Felgenaufnahme 28 ist auf der Motornabe 21 mittels einer darauf aufgeschraubten Mutter 31 und Sicherungsscheibe 32 befestigt. Die Mutter 31 ist auf einen mit Außengewinde 33 versehenen äußeren Absatz 34 der Motornabe 21 aufgeschraubt. Der Motor 12, das Getriebe 25, die Motornabe 21 und die Felgenaufnahme 28 verlaufen koaxial und führen zu einer außerordentlich gedrängten axialen Bauweise, wobei das auf der Motornabe 21 befestigte Rad 13 von der einen Axialseite frei zugänglich ist und schnell montiert bzw. demontiert werden kann. Der an die Felgenaufnahme 28 anschließende Radialabschnitt 35 der Felge 29 verläuft unter Belassung eines Spiels in axialem Abstand vom zugeordneten Bereich des Gehäuseteils 24, so dass die Felge 29 sich in Bezug auf den feststehenden Gehäuseteil 24 ungehindert drehen kann. Ersichtlich erfolgt die Übertragung des vom Motor 12 erzeugten Drehmoments unmittelbar direkt auf die Felge 29.

Der Motor 12 ist mit einer Bremseinrichtung 40 zu einer feststehenden Einheit verbunden. Diese Bremseinrichtung 40 besteht z. B. aus einer Trommelbremseinrichtung und/oder aus einer in Fig. 1 nur schematisch dargestellten Scheibenbremseinrichtung 41. Das undrehbare Funktionselement der Bremseinrichtung 40, das bei der Scheibenbremseinrichtung 41 z. B. aus einem angedeuteten Bremssattel 42 besteht, ist undrehbar am Außengehäuse 18 des Motors 12 gehalten. Zur Halterung des Bremssattels 42 dient ein schematisch angedeuteter, an dem Außengehäuse 18 fest angebrachter Halter 43, der die Anschlüsse für die Betätigung des Bremssattels 42 aufweist.

Der Motor 12 ist mit seinem Außengehäuse 18 zur direkten Befestigung an einem Haltearm 36 für das eine Rad 13 ausgebildet. Der Haltearm 36 besteht z. B. aus einer Einarmschwinge. An dieser ist das Außengehäuse 18 mit der Gehäuseseite angelegt und befestigt, die in axialer Richtung der Motornabe 21 gegenüberliegt.

Der Motor 12 einschließlich des Getriebes 25 und der Motornabe 21 bildet ein Bauteil, das bedarfsweise lösbar am Haltearm 36 befestigt wird, wobei der Bremssattel 42 mittels des Halters 43 bereits montiert sein kann. Das dem Bremssattel 42 zugeordnete drehende Element der Bremseinrichtung 40, z. B. Scheibenbremseinrichtung 41, das in diesem Fall aus einer Bremsscheibe 44 besteht, ist in die Felge 29 des Rades 13 integriert und/oder an dem Bremssattel 42 zugeordneter Stelle an dieser befestigt, z. B. mittels einer angedeuteten Halterung 45. Bei der erfindungsgemäßen Antriebseinrichtung 10 sind somit der Antrieb in Form des Motors 12, ggf. mit nachgeschaltetem Getriebe 25, und die Bremseinrichtung 40 funktionsgerecht kombiniert, wobei dazu nur wenige Bauteile erforderlich sind. Das Außengehäuse 18 des Motors 12 enthält letzeren und ggf. zusätzlich das Getriebe 25 sowie die Motornabe 21 und trägt gleichzeitig den feststehenden Teil der Bremseinrichtung 40, insbesondere Scheibenbremseinrichtung 41, wobei in diesem Fall der feststehende Teil aus dem mindestens einen Bremssattel 42 besteht. Statt dessen kann die Bremseinrichtung 40 auch als Trommelbremseinrichtung ausgebildet sein, wobei dann die Bremstrommel den umlaufenden Teil darstellt und mit der Felge 29 fest verbunden ist, während der feststehende Teil aus Bremsbacken besteht, die über entsprechende Halter analog dem Halter 43 am Außengehäuse 18 befestigt sind. Die Kombination von Antrieb einerseits und Bremseinrichtung 40 andererseits bewirkt eine bauliche Verkleinerung und führt zu einer direkten, festen Verbindung mit zentrischem Aufbau. Zudem wird ein einfaches Handling beim Montieren und Demontieren des Rades 13 ermöglicht. Die Kraftübertragung der Antriebseinrichtung 10 wirkt unmittelbar an der Felge 29.

Der Motor 12, insbesondere in der Ausbildung als Elektromotor, kann mit besonderem Vorteil auch für die generatorische Brems-Betriebsart zum elektrischen Bremsen ausgebildet sein. Bei dieser Art der Verwendung als Generator wird beim Abbremsen des Rades 13 Energie in die Batterie des Zweirades 11 zurückgespeist und somit eine Energierückgewinnung erreicht, wobei ein geringerer Verschleiß an der mechanischen Bremseinrichtung 40 entsteht. Die mechanische, durch die Bremseinrichtung 40 aufgebrachte Bremskraft kann dabei mit der elektrischen Bremskraft "verblendet" werden, derart, dass beide Bremskräfte parallel arbeiten, wobei die Batterieladung durch Bremsen Priorität hat und beide Bremsen zusammen im "Master-Slave" Verfahren auf 100% funktionieren. Die Batterieladung durch elektrisches Bremsen sollte dabei Priorität haben. Ist die Batterie dabei vollgeladen, muss die mechanische Bremseinrichtung 40 die ganze Last tragen, um ein Überladen der Batterie bzw. zu geringe oder zu starke Bremsleistung zu unterbinden. Die Steuerung hierzu kann beispielsweise durch ein nicht weiter gezeigtes relaisgesteuertes Hydraulikventil bewerkstelligt werden.

## Patentansprüche

1. Antriebseinrichtung für ein Fahrzeug, insbesondere ein Zweirad (11), wobei die Antriebseinrichtung (10) einen, insbesondere elektrischen, Motor (12) zum Antrieb eines der Räder (13, 14) des Fahrzeugs (11) aufweist,
wobei der Motor (12) ein nicht umlaufendes Außengehäuse (18) und auf einer axialen Abtriebsseite eine angetriebene Motornabe (21) aufweist, die koaxial zur Radachse (22) des angestriebenen Rades (13; 14)
verläuft, **dadurch gekennzeichnet, dass**
der Motor (12) mit einer außerhalb des Motorgehäuses an dem Außengehäuse (18) des Motors (12) vorgesehenen Bremseinrichtung (40), insbesondere einer
Scheibenbremseinrichtung (41) und/oder Trorramelbremseinrichtung, zu einer feststehenden Einheit verbunden ist, und dass
am Außengehäuse (18) des Motors (12) das undrehbar gehaltene Funktionselement der Bremseinrichtung (40), insbesondere mindestens ein Bremssattel (42) einer
Scheibenbremseinrichtung (41), befestigt ist, während das drehende Element der Bremseinrichtung (40) in die Radfelge integriert und/oder an dieser befestigt ist.

2. Antriebseinrichtung nach Anspruch 1, **dadurch gekennzeichnet, dass** axial zwischen dem Motor (12) und der Motornabe (21) koaxial dazu ein Getriebe (25),
insbesondere ein Planetengetriebe, angeordnet ist, dessen Eingang mit der Rotorwelle (17) des Motors (12) und dessen Ausgang mit der Motornabe (21) in
Antriebsverbindung steht.

3. Antriebseinrichtung nach einem der Ansprüche 1 oder 2, **dadurch gekennzeichnet,**
**dass** der Motor (12) auch für die generatorische Brems-Betriebsart zum elektrischen Bremsen ausgebildet ist.

4. Antriebseinrichtung nach einem der Ansprüche 1 bis 3, **dadurch gekennzeichnet,**
**dass** die Motornabe (21) zur direkten Befestigung einer Felge (29) daran mit einer Felgenaufnahme (28) des einen Rades (13) ausgebildet ist.

5. Antriebseinrichtung nach einem der Ansprüche 1 bis 4, **dadurch gekennzeichnet,**
**dass** der Motor (12) mit dem Außengehäuse (18) zur direkten Befestigung an einem Haltearm (36) für das eine Rad (13) ausgebildet ist.

6. Zweirad, mit einer Antriebseinrichtung (10) zum Antrieb eines der Räder (13, 14),
**dadurch gekennzeichnet, dass** die Antriebseinrichtung (10) nach einem der Ansprüche 1 bis 5 ausgebildet ist, und vorzugsweise, dass der Motor (12) mit seinem Außengehäuse (18) an einem Haltearm (36), insbesondere einer Einarmschwinge, lösbar befestigt ist.

7. Zweirad nach Anspruch 6, **dadurch gekennzeichnet, dass** das angetriebene Rad (13; 14) mit einer Felgenaufnahme (28) direkt auf der Motornabe (21) montiert und gehalten ist.

8. Zweirad nach Anspruch 6 oder 7, **dadurch gekennzeichnet, dass** das drehende Element der Bremseinrichtung (40) eine Bremsscheibe (44) oder eine Bremstrommel ist.

## Claims

1. Drive device for a vehicle, in particular a bicycle (11), the drive device (10) having an, in particular electric, motor (12) for driving one of the wheels (13, 14) of the vehicle (11), the motor (12) having a non-rotating outer housing (18) and, on an axial output side, a driven motor hub (21) which runs coaxially with respect to the wheel axis (22) of the driven wheel (13, 14), **characterized in that** the motor (12) is connected to a brake device (40) which is provided outside the motor housing on the outer housing (18) of the motor (12), in particular a disc brake device (41) and/or drum brake device, to form a fixed unit, and **in that** that functional element of the brake device (40) which is held non-rotatably, in particular at least one brake calliper (42) of a disc brake device (41), is fastened to the outer housing (18) of the motor (12), whereas the rotating element of the brake device (40) is integrated into the wheel rim and/or is fastened to it.

2. Drive device according to Claim 1, **characterized in that** a gear mechanism (25), in particular a planetary gear mechanism, is axially arranged between the motor (12) and the motor hub (21) coaxially with respect thereto, the input of which gear mechanism (25) is drive-connected to the rotor shaft (17) of the motor (12) and the output of which gear mechanism (25) is drive-connected to the motor hub (21).

3. Drive device according to either of Claims 1 and 2, **characterized in that** the motor (12) is also configured for the generator brake operating mode for electric braking.

4. Drive device according to one of Claims 1 to 3, **characterized in that** the motor hub (21) is configured for direct fastening of a rim (29) thereto by way of a rim holder (28) of the one wheel (13).

5. Drive device according to one of Claims 1 to 4, **characterized in that** the motor (12) is configured by way of the outer housing (18) for direct fastening to a supporting arm (36) for the one wheel (13).

6. Bicycle, having a drive device (10) for driving one of the wheels (13, 14), **characterized in that** the drive device (10) is configured according to one of Claims 1 to 5, and preferably **in that** the motor (12) is fastened releasably by way of its outer housing (18) to a supporting arm (36), in particular a single-sided swing arm.

7. Bicycle according to Claim 6, **characterized in that** the driven wheel (13, 14) is mounted and held directly on the motor hub (21) by way of a rim holder (28).

8. Bicycle according to Claim 6 or 7, **characterized in that** the rotating element of the brake device (40) is a brake disc (44) or a brake drum.

## Revendications

1. Dispositif d'entraînement pour un véhicule, en particulier pour un deux-roues (11), le dispositif d'entraînement (10) présentant un moteur (12), en particulier électrique, pour l'entraînement de l'une des roues (13, 14) du véhicule (11), le moteur (12) présentant un boîtier extérieur (18) non rotatif et un moyeu de moteur entraîné (21) sur un côté de prise de force axial, le moyeu de moteur s'étendant coaxialement par rapport à l'essieu de roue (22) de la roue entraînée (13, 14), **caractérisé en ce que**
le moteur (12) est connecté à un dispositif de frein (40), en particulier un dispositif de frein à disque (41) et/ou un dispositif de frein à tambour, prévu à l'extérieur du boîtier de moteur au niveau du boîtier extérieur (18) du moteur (12), pour former une unité fixe, et **en ce que** l'élément fonctionnel du dispositif de frein (40) retenu de manière non rotative, en particulier au moins un étrier de frein (42) d'un dispositif de frein à disque (41), est fixé au niveau du boîtier extérieur (18) du moteur (12), tandis que l'élément rotatif du dispositif de frein (40) est intégré dans la jante et/ou est fixé à celle-ci.

2. Dispositif d'entraînement selon la revendication 1, **caractérisé en ce qu'**une transmission (25), en particulier une transmission planétaire, est disposée axialement entre le moteur (12) et le moyeu de moteur (21) coaxialement à ceux-ci, l'entrée de la transmission étant en liaison d'entraînement avec l'arbre de rotor (17) du moteur (12) et sa sortie étant en liaison d'entraînement avec le moyeu de moteur (21).

3. Dispositif d'entraînement selon l'une quelconque des revendications 1 ou 2, **caractérisé en ce que** le moteur (12) est également réalisé pour un mode de fonctionnement de frein générateur pour le freinage électrique.

4. Dispositif d'entraînement selon l'une quelconque des revendications 1 à 3, **caractérisé en ce que** le moyeu de moteur (21) est réalisé pour une fixation directe d'une jante (29) à celui-ci avec un logement de jante (28) de l'une des roues (13).

5. Dispositif d'entraînement selon l'une quelconque des revendications 1 à 4, **caractérisé en ce que** le moteur (12) est réalisé avec le boîtier extérieur (18) pour la fixation directe à un bras de fixation (36) pour l'une des roues (13).

6. Deux-roues, comprenant un dispositif d'entraînement (10) pour l'entraînement de l'une des roues (13, 14), **caractérisé en ce que** le dispositif d'entraînement (10) est réalisé selon l'une quelconque des revendications 1 à 5, de préférence **en ce que** le moteur (12), avec son boîtier extérieur (18), est fixé de manière amovible au niveau d'un bras de fixation (36), en particulier d'un monobras.

7. Deux-roues selon la revendication 6, **caractérisé en ce que** la roue entraînée (13, 14) est montée et retenue par un logement de jante (28) directement sur le moyeu de moteur (21).

8. Deux-roues selon la revendication 6 ou 7, **caractérisé en ce que** l'élément rotatif du dispositif de frein (40) est un disque de frein (44) ou un tambour de frein.
